# FASCICULE DE BREVET EUROPEEN

(11) **EP 1 319 812 B1**
(45) Date de publication et mention de la délivrance du brevet: **14.03.2007**
(21) Numéro de dépôt: 02293022.6
(22) Date de dépôt: 06.12.2002
(51) Int. Cl.: F01N 3/023

(54) **Procédé de gestion de l'énergie dans un véhicule automobile équipé d'un moteur à combustion interne et d'un filtre à particules**
Leistungssteuerungsverfahren in einem Kraftfahrzeug mit einer Brennkraftmaschine und einem Partikelfilter
Power management method in a vehicle with an internal combustion engine and a particle filter

(30) Priorité: 07.12.2001 FR 0115812
(43) Date de publication de la demande: 18.06.2003
(73) Titulaire: Renault s.a.s., 92100 Boulogne Billancourt (FR)
(72) Inventeur: Hekimian, Georges, 92300 Levallois (FR)

(56) Documents cités:
- WO-A-01/53664
- DE-A- 3 842 632
- FR-A- 2 805 222
- US-A- 5 327 992

## Description

La présente invention concerne un procédé de gestion de l'énergie dans un véhicule automobile équipé d'un moteur à combustion interne et d'un filtre à particules. Elle vise plus particulièrement à améliorer l'efficacité de la régénération du filtre à particules dans un tel véhicule.

On connaît déjà, pour des moteurs diesels notamment pour véhicules de tourisme, des filtres à particules, destinées à réduire les émissions de particules par ces moteurs. Les normes de pollution applicables aux automobiles sont de plus en plus sévères et l'utilisation d'un filtre à particule est actuellement la solution la plus efficace pour réduire des émissions de particules nocives.

Placé sur la ligne d'échappement du moteur, le filtre à particule permet, lors de phases de chargement du filtre, de collecter les particules par passage des gaz d'échappement à travers une paroi poreuse du dit filtre. Puis, lors de phases de régénération, les suies formées par les accumulations de particules retenues sur la paroi poreuse sont éliminées par combustion. Cette combustion nécessite généralement une température élevée de l'ordre de 500 à 600°C, qui peut être obtenue de diverses manières, mais en particulier en portant temporairement les gaz d'échappement à une température suffisante pour assurer la dite combustion.

Le processus de régénération est alors complexe et nécessite un contrôle du fonctionnement du moteur adapté afin d'éviter par exemple que des forts gradients thermiques n'endommage le filtre. De plus le processus de régénération doit être fiable et reproductible automatiquement, et ceci sans que les variations de conditions de fonctionnement du moteur soient perceptibles par l'utilisateur, par exemple le conducteur du véhicule en conditions de circulation normales.

Pour augmenter la température des gaz d'échappement, on peut par exemple modifier les réglages du moteur pour dégrader le rondement mécanique de la combustion, ce qui provoque corrélativement une augmentation de l'énergie dissipée par les gaz d'échappement en sortie du moteur.

Cette solution a été proposée pour des véhicules hybrides. Le brevet FR2805222 décrit un système de traction hybride selon lequel on provoque une augmentation de température des gaz d'échappement, propre à régénérer un filtre à particules, en chargeant momentanément le moteur thermique par la machine électrique accouplée au moteur thermique, qui fonctionne en génératrice dans la phase de régénération, pour surcharger le moteur thermique.

Il est possible au cours de cette surcharge de récupérer une partie de l'énergie supplémentaire fournie par le moteur thermique en surcharge qui sera ensuite restituée afin de servir au déplacement du véhicule. Le document US5327992 décrit un procédé de contrôle de l'alimentation en énergie d'un véhicule hybride qui comprend un moteur thermique et au moins un moteur électrique adapté à consommer ou fournir de l'énergie électrique. Cette méthode consiste pendant certaines phases à charger la batterie d'alimentation du moteur électrique pour que celui-ci puisse prendre le relais total ou partiel du moteur thermique pendant d'autres phases de fonctionnement. Pour cela, on utilise la différence entre le couple que le moteur thermique fournit et le couple minimal que celui-ci doit fournir pour compenser les résistances à l'avancement du véhicule pour entraîner le moteur électrique en tant que générateur afin de charger la batterie. L'énergie récupérée et stockée pendant cette surcharge peut voir divers usages mais en particulier comme décrit dans le document DE3842632 peut servir à alimenter le moteur électrique afin de faire circuler le véhicule avec son seul moteur électrique dans certaines zones de circulation polluées.

Un autre moyen connu pour réchauffer les gaz d'échappement avant leur arrivée sur le filtre à particules est d'utiliser l'exothermicité d'un catalyseur d'oxydation placé sur la ligne d'échappement en amont du filtre à particules. En effet, les gaz d'échappement à la sortie du moteur contiennent naturellement des hydrocarbures imbrûlés HC et du monoxyde de carbone CO qui sont oxydés sur le catalyseur d'oxydation. Cette réaction d'oxydation est elle-même exothermique et en conséquence réchauffe les gaz d'échappement lorsqu'ils traversent l'élément catalyseur, les portant ainsi à une température plus apte à provoquer la combustion des particules dans le filtre à particules.

On peut par ailleurs augmenter cet effet exothermique du catalyseur en modifiant les réglages du moteur pour qu'il produise plus de CO et de HC, et donc augmenter l'énergie des réactions d'oxydation sur le catalyseur. Toutefois, bien évidemment, cet effet ne se produit que si le catalyseur d'oxydation est lui-même amorcé, c'est à dire s'il a atteint une température interne suffisante pour déclencher les réactions d'oxydations.

Dans tous ces cas, la commande de l'augmentation de la température des gaz d'échappement est réalisée en fait par une modification des paramètres d'injection de carburant dans le moteur, pour influer sur la composition des gaz d'échappement.

Un exemple d'une telle réalisation est décrite dans le document WO0153664 et en particulier un procédé qui vise à obtenir une augmentation temporaire des gaz d'échappement, en particulier pour régénérer un filtre à particule, par une augmentation de la charge du moteur. Cette augmentation de charge est obtenue par la mise en service d'un consommateur d'énergie, électrique, mécanique ou hydraulique, par exemple un système de chauffage ou de climatisation et en compensant la diminution de couple par une régulation de la quantité de carburant injecté.

La gestion de ce processus est efficace mais néanmoins complexe, en particulier du fait qu'il faut de plus tenir compte des paramètres de réglage moteur propres à assurer son fonctionnement adéquat du point de vue mécanique, les conditions de fonctionnement étant très variables dans le cas de moteur d'automobiles. A titre d'exemple, les paramètres qui déclenchent la régénération du filtre à particule peuvent être une durée prédéterminée à compter de la régénération précédente, estimée par exemple en terme de distance parcourue, ou la mesure d'une pression différentielle entre l'entrée et la sortie du filtre, qui constitue un indicateur de colmatage, ou encore une estimation de la production de particules, calculée à partir des paramètres de fonctionnement du moteur.

Dans certains cas de faible ou très faible charge du moteur, par exemple lors de fonctionnement au ralenti pendant des périodes assez longues, l'élévation de température peut malgré tout rester insuffisante, et la régénération du filtres à particule peut donc ne pas s'effectuer correctement.

La présente invention a pour but de résoudre ces problèmes et vise particulièrement à améliorer l'efficacité de la régénération des filtres à particules.

Avec ces objectifs en vue, l'invention a pour objet un procédé de gestion de l'énergie dans un véhicule automobile équipé d'un moteur à combustion interne et d'un filtre à particules, pour améliorer la régénération du filtre à particules lors d'une phase de régénération, on provoque pendant une durée limitée une augmentation de la charge du moteur en commandant une augmentation de l'énergie motrice consommée par un organe consommateur d'énergie motrice entraîné par le moteur, de manière que cette augmentation temporaire de la charge entraîne une élévation de la température des gaz d'échappement à une valeur de température suffisante et pendant une durée suffisante pour assurer la dite régénération.

Ce procédé étant spécialement remarquable en ce que l'organe consommateur d'énergie motrice est un générateur d'énergie emmagasinable, c'est à dire un dispositif fournissant lui-même de l'énergie secondaire pouvant être emmagasinée au moins temporairement dans une réserve d'énergie. L'énergie secondaire ainsi accumulée pendant la phase de régénération du filtre à particule peut être restituée après la phase de régénération, soit aux organes du véhicule constituant des consommateurs habituels de cette énergie, soit au moteur lui-même

Ainsi, l'accroissement de la charge du moteur pendant une durée limitée sera déterminée pour être suffisante pour assurer la régénération du filtre à particules. Dès la régénération effectuée, l'organe consommateur d'énergie motrice pourra être commandée de manière à ramener sa consommation d'énergie à un niveau normal, tel que le moteur retrouve lui aussi sa charge normale.

Dans le premier cas, l'organe consommateur d'énergie motrice et générateur d'énergie secondaire stockable, par exemple un alternateur ou un compresseur, pourra être commandé de manière à ce qu'il ne consomme plus, ou qu'il consomme moins, au moins pendant un certain temps, de l'énergie fournie par le moteur, ce qui réduira alors la charge du moteur pendant les périodes de chargement du filtre à particules, entre deux périodes de régénération. Les accessoires consommateurs de la dite énergie stockable pourront alors cependant fonctionner normalement en utilisant l'énergie stockée préalablement en excès, de manière à réduire le niveau énergétique de la réserve d'énergie jusqu'à un seuil minimal. Ce niveau réduit d'énergie permettra ainsi de recommencer un nouveau cycle de stockage lors de la phase de régénération suivante.

Dans le deuxième cas, par exemple dans l'utilisation d'un disque d'inertie couplé au moteur, l'énergie stockée dans le disque lors de la phase de surcharge du moteur pourra être restituée directement au moteur après la régénération du filtre, pour apporter un complément d'énergie mécanique directement au moteur.

Lorsque l'on utilise un organe consommateur d'énergie et générateur d'énergie emmagasinable, et en ayant par ailleurs connaissance d'un déclenchement futur d'une phase de régénération, on peut aussi arrêter volontairement de produire cette énergie emmagasinable à partir d'un moment prédéterminé avant le déclenchement de la régénération, et ainsi faire diminuer la réserve d'énergie par anticipation, pour pouvoir la reconstituer au moment de la régénération en augmentant la charge du moteur.

L'invention a aussi pour objet un moteur à combustion interne équipé d'un filtre à particule et comprenant un calculateur destiné à mettre en oeuvre le procédé tel que défini ci-dessus.

D'autres caractéristiques et avantages apparaîtront dans la description qui va être faite d'un exemple de mise en oeuvre du procédé selon l'invention dans un véhicule équipé d'un moteur à combustion interne et d'un filtre à particules.

On se reportera aux dessins annexés dans lesquels :

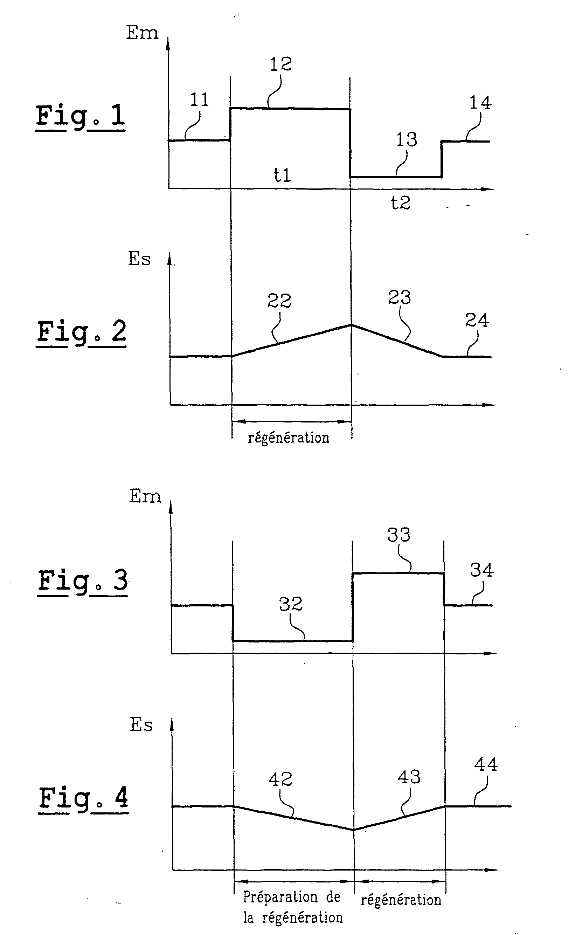

- la figure 1 est un graphique illustrant les variations de l'énergie Eₘ nécessaire pour entraîner temporairement un organe de production d'énergie, et donc créer une variation de la charge du moteur apte à augmenter la température des gaz d'échappement et à permettre la régénération du filtre à particules,
- la figure 2 est un graphique correspondant montrant l'élévation du niveau d'énergie secondaire Eₛ de la réserve d'énergie pendant la phase de régénération du filtre à particules, puis sa diminution après cette phase, résultant de la consommation de l'énergie stockée par des accessoires consommateurs de cette énergie stockée,
- les figures 3 et 4 sont des figures correspondantes aux figures 1 et 2, dans le cas où on anticipe les phases de régénération du filtre à particules en provoquant un abaissement volontaire du niveau de l'énergie secondaire Eₛ stockée avant les phases de régénération.

Sur la figure 1, la partie 11 du tracé correspond à une situation où l'organe consommateur d'énergie mécanique serait désaccouplé du moteur ou à une consommation moyenne d'énergie par un tel organe entraîné par le moteur, par exemple un moyen de génération d'énergie électrique tel que l'alternateur classiquement utilisé dans un véhicule automobile, ou un compresseur de climatisation, ou tout autre organe pneumatique, électrique, hydraulique ou même mécanique, consommant une partie de l'énergie mécanique totale fournie par le moteur.

A partir du moment t1, on commande l'organe consommateur d'énergie, soit en le reliant au moteur, ou en le pilotant de manière qu'il devienne consommateur d'énergie, ou qu'il augmente sa consommation d'énergie par rapport à la moyenne. La partie 12 du tracé correspond donc à une augmentation de l'énergie mécanique consommée Eₘ, donc à une charge accrue sur le moteur, qui permet d'augmenter la température des gaz d'échappement et d'assurer ainsi la régénération du filtre à particule.

La partie 22 correspondante du tracé de la figure 2 représente la croissance du niveau d'énergie Eₛ dans la réserve d'énergie, telle que la charge d'une batterie d'accumulateur par exemple lorsque l'organe associé au moteur est un alternateur, ou la pression d'un fluide dans un réservoir sous pression dans le cas le cas d'utilisation d'un organe consommateur d'énergie générant de l'énergie pneumatique. Dans le cas d'utilisation d'un disque d'inertie entraîné par le moteur comme moyen de stockage d'énergie, cela se traduira alors par une augmentation de la vitesse de rotation de ce disque.

Ainsi, le niveau d'énergie secondaire stockée augmente pendant toute la phase de régénération du filtre à particule.

Dès la régénération terminée, au moment t2, l'organe consommateur d'énergie motrice pourra être découplé du moteur, ou commandé de manière à ne plus fournir d'énergie secondaire stockable, ce qui va diminuer la charge appliquée sur le moteur en supprimant ou au moins en réduisant la quantité d'énergie fournie au dit organe, représentée par la portion 13 du graphique de la figure 1. La quantité d'énergie stockée va alors décroître, comme représenté par la portion 23 du tracé de la figure 2, par consommation de cette énergie par les accessoires correspondants, tels que par exemple tous accessoires électriques qui déchargeront alors la batterie, jusqu'à un niveau 24 permettant de réaliser un nouveau cycle de régénération. Les organes consommateurs d'énergie mécanique pourront alors être à nouveau pilotés pour qu'ils produisent de l'énergie, le cas échéant, sans attendre une nouvelle phase de régénération, pour maintenir l'énergie stockée à un niveau suffisant pour assurer les fonctions requises dans le véhicule, les dits organes étant alors à nouveau consommateurs d'énergie motrice, à un niveau moyen illustré par la portion de tracé 14.

Si on sait anticiper les phases de régénération, on peut commander le ou les organes consommateurs d'énergie pour qu'ils arrêtent de produire leur énergie stockable un certain temps avant la régénération (portion 32 de la courbe de la figure 3). Le niveau d'énergie stockée va alors décroître (portion 42 du tracé de la figure 4) jusqu'à un minimum prédéterminé pour être atteint sensiblement au moment de lancer la régénération. On commande alors la mise en action des organes consommateurs d'énergie motrice, ce qui provoque une augmentation momentanée de la charge du moteur (portion 33 du tracé figure 3), apte à augmenter la température des gaz d'échappement et à réaliser la dite régénération du filtre à particules. Pendant ce temps, le niveau d'énergie de la réserve d'énergie croît (tracé 43) jusqu'à retrouver son niveau moyen, illustré par le tracé 44. Les organes consommateurs d'énergie peuvent alors être pilotés soit pour les désaccoupler du moteur ou pour les ramener dans un état de consommation moyenne d'énergie motrice, illustrée par le tracé 44.

On pourra encore, pour augmenter temporairement la charge du moteur, utilise d'autres moyens, tels que par exemple une augmentation des frottements dans la boîte de vitesse dans le cas d'une boîte de vitesse gérée par un calculateur, telle que une boîte de vitesse automatique ou robotisée.

## Revendications

1. Procédé de gestion de l'énergie dans un véhicule automobile équipé d'un moteur à combustion interne et d'un filtre à particules, pour améliorer la régénération du filtre à particules lors d'une phase de régénération, on provoque pendant une durée limitée une augmentation de la charge du moteur en commandant une augmentation (12) de l'énergie motrice consommée par un organe consommateur d'énergie motrice entraîné par le moteur, de manière que cette augmentation temporaire de la charge entraîne une élévation de la température des gaz d'échappement à une valeur de température suffisante et pendant une durée suffisante pour assurer la dite régénération, **caractérisé en ce que** l'organe consommateur d'énergie motrice est un générateur d'énergie emmagasinable fournissant de l'énergie secondaire pouvant être emmagasinée au moins temporairement dans une réserve d'énergie et restituée après la phase de régénération aux organes du véhicule constituant des consommateurs habituels de cette énergie secondaire.

2. Procédé selon la revendication 2, **caractérisé en ce que** l'énergie secondaire accumulée pendant la phase de régénération du filtre à particule est restituée après la phase de régénération au moteur lui-même.

3. Procédé selon la revendication 2, **caractérisé en ce que** l'organe consommateur d'énergie motrice est commandé de manière à ce qu'il ne consomme plus, ou qu'il consomme moins, au moins pendant un certain temps, d'énergie fournie par le moteur, pour réduire la charge du moteur pendant les périodes de chargement du filtre à particules, entre deux périodes de régénération, des accessoires consommateurs de la dite énergie stockable fonctionnant alors en utilisant l'énergie stockée préalablement en excès, de manière à réduire le niveau énergétique de la réserve d'énergie.

4. Procédé selon la revendication 2, **caractérisé en ce que** l'organe consommateur d'énergie motrice est un alternateur ou un compresseur.

5. Procédé selon la revendication 4, **caractérisé en ce que** l'organe consommateur d'énergie motrice est un disque d'inertie.

6. Procédé selon la revendication 2, **caractérisé en ce que** l'on utilise l'organe consommateur d'énergie motrice et générateur d'énergie emmagasinable, et on arrête volontairement de produire cette énergie emmagasinable à partir d'un moment prédéterminé avant le déclenchement de la régénération, afin de faire diminuer la réserve d'énergie par anticipation, pour pouvoir la reconstituer au moment de la régénération en augmentant la charge du moteur.

7. Moteur à combustion interne équipé d'un filtre à particule et comprenant un calculateur destiné à mettre en oeuvre le procédé selon l'une quelconque des revendications précédentes.

## Claims

1. Power management method in a motor vehicle with an internal combustion engine and a particle filter, to improve the regeneration of the particle filter during a regeneration phase, an increase in the engine load is induced for a limited duration by controlling an increase (12) in the engine power consumed by an engine power consuming component driven by the engine, so that this temporary increase in the load causes a rise in the temperature of the exhaust gases to a sufficient temperature value and for a sufficient duration to ensure the said regeneration, **characterized in that** the engine power consuming component is a storable power generator supplying secondary energy which is able to be stored at least temporarily in an energy store and released after the regeneration phase to the vehicle components constituting typical consumers of this secondary energy.

2. Method according to Claim 2, **characterized in that** the secondary energy stored during the particle filter regeneration phase is released after the regeneration phase to the engine itself.

3. Method according to Claim 2, **characterized in that** the engine power consuming component is controlled so that it does not consume, or that it consumes less, at least during a certain time, energy supplied by the engine, to reduce the engine load during the periods when the particle filter is loading, between two regeneration periods, accessories consuming the said storable energy then operating by using the surplus energy previously stored, so as to reduce the energy level in the energy store.

4. Method according to Claim 2, **characterized in that** the engine power consuming component is an alternator or a compressor.

5. Method according to Claim 4, **characterized in that** the engine power consuming component is a flywheel.

6. Method according to Claim 2, **characterized in that** the engine power consuming component and storable energy generator are used, and the production of this storable energy is deliberately stopped, from a preset time before the regeneration is triggered, in order to reduce the store of energy in advance, to be able to release it at the time of the regeneration by increasing the engine load.

7. Internal combustion engine fitted with a particle filter and including an electronic control unit designed to start the method according to any one of the preceding claims.

## Patentansprüche

1. Verfahren zum Verwalten der Energie in einem Kraftfahrzeug, das mit einem Verbrennungsmotor und mit einem Partikelfilter ausgestattet ist, wobei man, um das Regenerieren des Partikelfilters bei einer Regenerierungsphase zu verbessern, während einer beschränkten Dauer eine Steigerung der Motorlast verursacht, indem man eine Steigerung (12) der von einem Antriebsenergie verbrauchenden Organ, das von dem Motor angetrieben wird, verbrauchten Antriebsenergie steuert, so dass diese vorübergehende Steigerung der Last ein Erhöhen der Temperatur der Abgase auf einen Temperaturwert nach sich zieht, der ausreicht und lang genug dauert, um das Regenerieren sicherzustellen, **dadurch gekennzeichnet, dass** das Antriebsenergie verbrauchende Organ ein Generator für speicherbare Energie ist, der Sekundärenergie liefert, die zumindest vorübergehend in einer Energiereserve gespeichert und nach der Regenerierungsphase an die Organe des Fahrzeugs, die gewöhnlich Verbraucher dieser Sekundärenergie bilden, zurückgegeben werden kann.

2. Verfahren nach Anspruch 2, **dadurch gekennzeichnet, dass** die während der Regenerierungsphase des Partikelfilters angesammelte Sekundärenergie nach der Regenerierungsphase an den Motor selbst zurückgegeben wird.

3. Verfahren nach Anspruch 2, **dadurch gekennzeichnet, dass** das Antriebsenergie verbrauchende Organ so gesteuert wird, dass es während mindestens einer bestimmten Zeit keine oder weniger von dem Motor gelieferte Energie verbraucht, um die Motorlast während der Ladeperioden des Partikelfilters zwischen zwei Regenerierungsperioden zu verringern, wobei Zubehörteile, die die speicherbare Energie verbrauchen, funktionieren, indem sie die zuvor gespeicherte überschüssige Energie so verwenden, dass das Energieniveau der Energiereserve verringert wird.

4. Verfahren nach Anspruch 2, **dadurch gekennzeichnet, dass** das Antriebsenergie verbrauchende Organ eine Wechselstromlichtmaschine oder ein Kompressor ist.

5. Verfahren nach Anspruch 4, **dadurch gekennzeichnet, dass** das Antriebsenergie verbrauchende Organ eine Trägheitsscheibe ist.

6. Verfahren nach Anspruch 2, **dadurch gekennzeichnet, dass** man das Antriebsenergie verbrauchende und speicherbare Energie erzeugende Organ verwendet, und dass man absichtlich ab einem vorbestimmten Augenblick vor dem Auslösen der Regenerierung stoppt, diese speicherbare Energie zu erzeugen, um vorwegnehmend die Energiereserve kleiner werden zu lassen, um sie im Augenblick der Regenerierung durch Steigern der Motorlast wiederherstellen zu können.

7. Verbrennungsmotor, ausgestattet mit einem Partikelfilter, der einen Rechner aufweist, der dazu bestimmt ist, das Verfahren nach einem der vorhergehenden Ansprüche umzusetzen.
